(19) **Europäisches Patentamt European Patent Office Office européen des brevets**

(11) **EP 2 187 467 B1**

(12) **EUROPEAN PATENT SPECIFICATION**

(45) Date of publication and mention
of the grant of the patent:
**08.06.2011 Bulletin 2011/23**

(51) Int Cl.:
*H01M 4/58* (2010.01)      *H01M 10/052* (2010.01)
*H01M 4/136* (2010.01)

(21) Application number: **09014302.5**

(22) Date of filing: **16.11.2009**

(54) **Cathode active material, cathode, and nonaqueous secondary battery**

Aktives Kathodenmaterial, Kathode und wasserfreie Sekundärbatterie

Matériau actif à cathode, cathode, et batterie secondaire non aqueuse

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.11.2008 JP 2008294707**

(43) Date of publication of application:
**19.05.2010 Bulletin 2010/20**

(73) Proprietor: **Sharp Kabushiki Kaisha Osaka-shi, Osaka 545-8522 (JP)**

(72) Inventors:
• **Ohira, Koji**
**Osaka-shi**
**Osaka 545-8522 (JP)**
• **Nishijima, Motoaki**
**Osaka-shi**
**Osaka 545-8522 (JP)**
• **Tanaka, Isao**
**Kyoto-shi**
**Kyoto 606-8501 (JP)**
• **Koyama, Yukinori**
**Kyoto-shi**
**Kyoto 606-8501 (JP)**

(74) Representative: **Müller - Hoffmann & Partner Patentanwälte**
**Innere Wiener Strasse 17**
**81667 München (DE)**

(56) References cited:
**EP-A- 1 246 290      JP-A- 2004 178 835**
**US-A1- 2006 014 079**

• **XIE H ET AL: "Physical and electrochemical properties of mix-doped lithium iron phosphate as cathode material for lithium ion battery" ELECTROCHIMICA ACTA, ELSEVIER SCIENCE PUBLISHERS, BARKING, GB, vol. 51, no. 10, 1 February 2006 (2006-02-01), pages 2063-2067, XP025167856 ISSN: 0013-4686 [retrieved on 2006-02-01]**

**Description**

Technical Field

The present invention relates to a cathode active material, a cathode made from the cathode active material, and a nonaqueous secondary battery (lithium secondary battery) including the cathode. More specifically, the present invention relates to (i) a cathode active material which makes it possible to provide a battery which not only excels in safety and cost but has a long life, (ii) a cathode made from the cathode active material, and (iii) a nonaqueous secondary battery which includes the cathode and is highly recyclable.

Background Art

Lithium secondary batteries have been used for portable electronic devices practically and widely. In addition, recent years, the lithium secondary batteries have attracted attention not only as small ones for the portable electronic devices but also as large-capacity devices for in-car use, power storage use, etc. This has heightened demand for safety, lower cost, longer life, etc.

A lithium secondary battery has a cathode, an anode, an electrolytic solution, a separator, and a housing, as its main components. The cathode is made up of a cathode active material, an electrical conducting material, a current collector, and a binder.

In general, the cathode active material is an layered transition metal oxide typified by $LiCoO_2$. However, the layered transition metal oxide is likely to undergo oxygen desorption at a relatively low temperature around 150°C when the layered transition metal oxide is fully charged. The oxygen desorption could cause thermal runaway reaction in the battery. In a case where a battery having such a cathode active material is used in a portable electronic device, the thermal runaway would cause heat generation, ignition, etc. of the battery.

Therefore, in a viewpoint of safety, it is expected that lithium manganate ($LiMn_2O_4$) having a spinel structure, lithium iron phosphate ($LiFePO_4$) having an olivine structure, etc. are preferable as the cathode active material because they have structural stability and do not discharge oxygen under abnormal conditions.

Cobalt (Co) is not favorable costwise because of its low crustal abundance resulting in its high cost. Therefore, it is expected that the following cathode active materials are preferable costwise: lithium nickelate ($LiNiO_2$) and a solid solution thereof ($Li(Co_{1-x}Ni_x)O_2$), lithium manganate ($LiMn_2O_4$), lithium iron phosphate ($LiFePO_4$), etc.

It is a problem in view of life of the battery that the cathode active material will undergo structural destruction as a result that Li insertion/desorption repeatedly occurs in the cathode active material due to charging/discharging. Therefore, lithium manganate ($LiMn_2O_4$) having a spinel structure, lithium iron phosphate ($LiFePO_4$) having an olivine structure, etc. are more expected as the cathode active material because of their structural stability, as compared to the layered transition metal oxides.

For the reasons mentioned above, for example, the lithium iron phosphate having an olivine structure is highly expected as a cathode active material of battery made in consideration of safety, cost, life, etc. In a case where lithium iron phosphate having an olivine structure is adopted as the cathode active material of a battery, there arises a problem of its low charge-discharge characteristics such as insufficient electron conductivity and a low average electric potential.

In view of the problems, an active material represented by the following general formula: $A_aM_b(XY_4)_cZ_d$ (where A is an alkali metal; M is a transition metal; $XY_4$ is $PO_4$ or the like; Z is OH or like) is proposed with the aim of improvement of charge-discharge characteristics (see, e.g., Patent Literature 1).

Also, an active material represented by the following general formula: $LiMP_{1-x}A_xO_4$ (M is a transition metal, where A is an element having an oxidation number not more than +4, and 0<X<1) is proposed which is substituted with an element A at the P site (see, e.g., Patent Literature 2).

EP-A-1 246 290 provides a nonaqueous electrolyte secondary battery, comprising: a positive electrode containing a positive electrode active material containing a lithium-containing composite metal oxide, a negative electrode, and a nonaqueous electrolyte, wherein said lithium-containing composite metal oxide has a composition represented by formula (1): $LiMg_xM_{1-x}PO_4$ where M is at least one kind of an element selected from the group consisting of Co and Ni, and the molar ratio x is larger than 0.5 and smaller than 0.75, i.e., 0.5 < x < 0.75.

US 2006/0014079 A1 describes a lithium secondary battery using a compound represented by the formula (1): $LiMP_{1-x}A_xO_4$, wherein M is a transistion metal such as Fe, Co, Mn, Ni, V, Cu, and Ti, A is an element having an oxidation number of +4 or less and 0<x<1 as electrode active material, preferably as cathode active material. The electrode active material shows excellent conductivity and charge/discharge capacity compared to $LiMPO_4$.

The above prior art documents do not disclose that the volumetric expansion/shrinkage may be suppressed by element substitution in a structure based on lithium iron phosphate as claimed in the present invention.

Citation List

Patent Literature 1

Japanese Unexamined Patent Application Publication (Japanese translation of PCT international publication No. 522009/2005 (Publication Date: July 21, 2005))

Patent Literature 2

Japanese Unexamined Patent Application Publication (Japanese translation of PCT international publication No. 506243/2008 (Publication Date: February 28, 2008))
EP-A-1 246 290
US 2006/014079 A1

Summary of Invention

Technical Problem

However, the active materials disclosed in Patent Literatures 1 and 2 cannot dissolve the problem of short lives of batteries utilizing such an active material.
Specifically, according to the arrangement of each of the active materials of Patent Literatures 1 and 2, each active material greatly expands or shrinks due to Li insertion/desorption caused by charging/discharging. Accordingly, in a case where the cathode active material is any of the active materials, the cathode active material would physically come off from a current collector and/or an electrical conducting material, as a result that the charging and the discharging are repeated a number of times. This can destroy a structure of the cathode active material. Specifically, the cathode active material which greatly expands or shrinks due to charging/discharging undergoes destruction of a secondary particle and/or destruction of a conducting path between the cathode active material and the electrical conducting material. This leads to an increase in internal resistance in the battery utilizing the cathode active material. This increases an active material which does not contribute to the charging/ discharging, thereby decreasing a capacity of the battery. As a result, the life of the battery is shortened.
Although a cathode active material which excels in all three aspects: safety, cost, and life is demanded as described above, the active materials of Patent Literatures 1 and 2 have the problem of short battery life for the reason that the active materials have high volumetric expansion/shrinkage rates (volumetric change rates) caused by the charging and discharging.
The present invention was made in view of the problem. An object of the present invention is to realize (i) a cathode active material which makes it possible to provide a battery which not only excels in safety and cost but also has a long life, (ii) a cathode made from the cathode active material, and (iii) a nonaqueous secondary battery including the cathode.

Solution to Problem

According to the present invention, volumetric expansion/shrinkage are suppressed by element substitution in a structure based on lithium iron phosphate. As a result, the present invention gives a long life to batteries.
Specifically, in order to attain the object, a cathode active material of the present invention is represented by the general formula (1):

$$Li_{1-x}A_xFe_{1-y}M_yP_{1-z}Al_zO_4 \qquad (1)$$

wherein A is at least one selected from

a metal element or transitional metal element having a valence of +1, +2 or +3, preferably selected from the group consisting of Na, K, Mg, Ca, Zn, Al, Y;
M is at least one selected from a metal element or a transition metal element having a valence of +3, +4, or +5, preferably selected from the group consisting of Al, Y, Ti, V, Cr, Mo, Nb, Zr, Hf, W, Sn, Sc, Zn, Cd, B, Ga, In, C, and Si and $0 \leq x \leq 0.25$, $0 \leq y \leq 0.25$, $0 < z \leq 0.25$, and $x + y > 0$,

in case A has a valence of + 1, it applies: $0 < x \leq y = z$.
In the cathode active material represented by the general formula (1) wherein A is as above defined; M is as above defined; $0 \leq x \leq 0.25$, $0 \leq y \leq 0.25$, $0 < z \leq 0.25$, and $x+y>0$, at least a part of the P site is substituted with Al, and a part of at least either the Li site or the Fe site is substituted with the other atom. Consequently, charge compensation can be made in a crystal structure, and a volumetric change caused by Li insertion/desorption can be also suppressed. As a result, a battery utilizing the cathode active material becomes free from the volumetric expansion/shrinkage of the cathode caused by charging/discharging.

Advantageous Effects of Invention

As described above, a cathode active material of the present invention is represented by the general formula (1):

$$Li_{1-x}A_xFe_{1-y}M_yP_{1-z}Al_zO_4 \qquad (1)$$

wherein A is as defined; M is as defined; $0{\leq}x{\leq}0.25$, $0{\leq}y{\leq}0.25$, $0{<}z{\leq}0.25$, and $x+y>0$.

Therefore, by substituting at least a part of the P site with Al, and substituting a part of at least the Li site or the Fe site with another atom, charge compensation can be made in a crystal structure, and a volumetric change caused by Li insertion/desorption can be also suppressed. As a result, a battery utilizing the cathode active material can be free from volumetric expansion/ shrinkage of the cathode caused by charging/discharging.

Further, as described above, a cathode of the present invention includes: the cathode active material of the present invention; an electrical conducting material; and a binder.

This makes it possible to provide a cathode which not only excels in safety and cost but also can give a longer life to batteries.

Further, as described above, the nonaqueous secondary battery of the present invention includes: the cathode of the present invention; an anode; an electrolyte; and a separator.

This makes it possible to provide a battery which not only excels in safety and cost but also has a longer life.

Brief Description of Drawings

Fig. 1

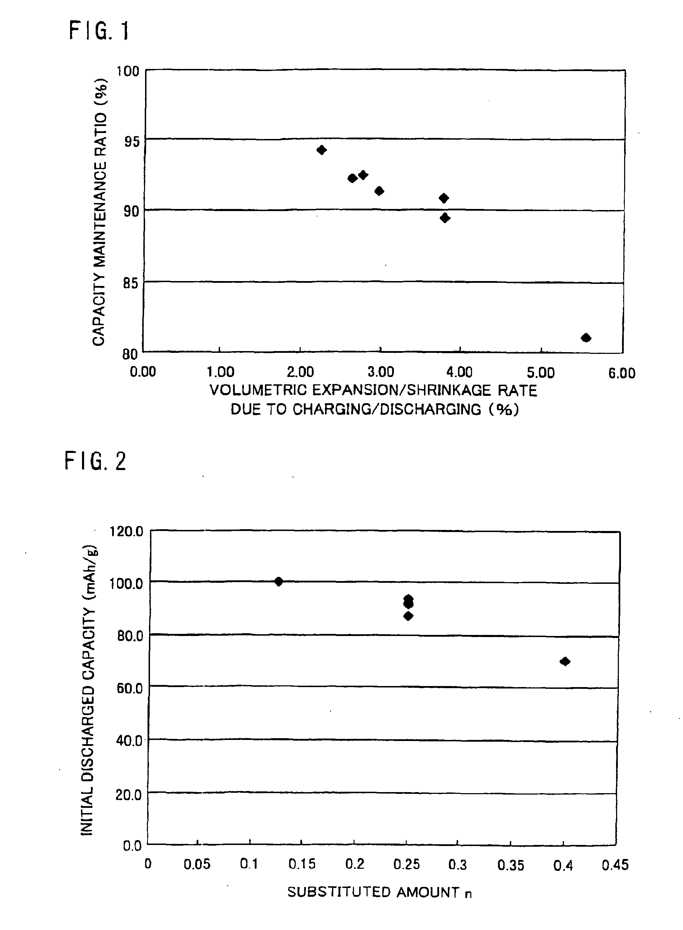

Fig. 1 is a graph showing a change in capacity maintenance ratio with respect to respective volumetric expansion/ shrinkage rates of cathode active materials made in examples of the present invention.
Fig. 2
Fig. 2 is a graph in which the horizontal axis represents substituted amounts (substituted amounts n) and the vertical axis represents initial discharged capacities. As a result of comparison between amounts of Li-site substitution and those of Fe-site substitution, the horizontal axis represents those found to be larger than the others.

Description of Embodiments

The following describes the present invention in detail. In the present Description, the following expression of a range: "A through B" refers to "not less than A but not more than B." Properties shown in the present Description are measurements obtained by methods described in Examples to be described later, unless otherwise specified.

(1) Cathode Active Material

A cathode active material of the present embodiment is represented by the following general formula (1):

$$Li_{1-x}A_xFe_{1-y}M_yP_{1-z}Al_zO_4 \qquad (1)$$

where A is as defined; M is as defined; and $0{\leq}x{\leq}0.25$; $0{\leq}y{\leq}0.25$; $0{<}z{\leq}0.25$; and $x+y>0$. Here, X=0 and Y=0 are not co-satisfied because x+y>0.

In the case of lithium iron phosphate having an olivine structure, in general, charging causes desorption of Li from an initial structure of the lithium iron phosphate, thereby decreasing a volume of the structure of the lithium iron phosphate. This structural change causes the structure to shrink along an a-axis and a b-axis, and expand along a c-axis. Therefore, the inventors of the present invention considered that such a volumetric change could be suppressed by a kind of substitution that causes smaller shrinkages along the a-axis and b-axis while causing a greater expansion along the c-axis.

The inventors found that substituting at least a part of P site with Al and substituting a part of at least either Li site and Fe site with another atom cause (i) charge compensation in a crystal structure; (ii) a smaller volumetric change caused by Li desorption; and (iii) smaller expansion/shrinkage caused due to charging/discharging. (If a small amount of Al substituting the P site, in some cases, the charge compensation may be achieved without such elemental substitution for the reason that the Fe atom comes to have a valence of +3, thereby achieving the charge compensation). In this case, the larger the lattice constants of the initial structure of the lithium iron phosphate having the olivine structure are, the more firmly the lithium iron phosphate maintains the initial structure even if the Li desorption occurs.

More specifically, after the elemental substitution, the a-axis preferably has a length of not less than 10.40Å, or more preferably, has a length of not less than 10.45Å. After the elemental substitution, the b-axis preferably has a length of not less than 6.05Å, or more preferably, has a length of not less than 6.10Å. After the elemental substitution, the c-axis preferably has a length of not less than 4.70Å, or more preferably, has a length of not less than 4.80Å. In general, lattice constants of lithium iron phosphate having such an olivine structure are 10.347Å along the a-axis, 6.0189Å along the b-axis, and 4.7039Å along the c-axis.

According to the principle that a total electric charge in a structure is zero, the following inequality: $(a-1)x+(m-2)y-2z \leq 0$ is satisfied, where "a" represents a valence of A, and "m" represents that of M. This is because, in the general formula (1), Li has a valence of + 1; Fe has a valence of +2 or +3; P has a valence of +5.

Most substances having the composition represented by the general formula (1) have an olivine structure. However, it should be noted that the present invention is not limited to the arrangement with an olivine structure but encompasses an arrangement without an olivine structure.

The substitution at the P site with Al requires charge compensation in the crystal structure for the reason that P and Al are different in valence number. As described above, if the amount of Al substituting the P site is small, in some cases, the elemental substitution may not be required for the reason that the Fe atom comes to have a valence of +3, and thereby the charge compensation is achieved. However, still, the charge compensation is preferably carried out by substituting at one or both of the Li site or the Fe site. In a case where the Fe atom does not come to have a valence of +3, Li-site substitution or Fe-site substitution is required in compensation for Al substitution so as to attain the charge compensation. Accordingly, a service capacity of the battery decreases in proportion to the amount of Al substituting the P site. For this reason, the amount of Al substituting the P site is preferably up to 1/4 of atoms of the P site. In other words, the cathode active material of the present embodiment is preferably arranged such that "z" of the general formula (1) is not more than 0.25.

On the other hand, the larger the amount of Al substituting the P site, the greater the effect of suppressing the volumetric expansion/shrinkage due to charging/ discharging. Therefore, the cathode active material of the present embodiment is preferably arranged such that "z" of the general formula (1) is larger than 0, but not less than 0.05.

An element A substituting the Li site is a typical metal element or a transition metal element. The element A may be one having a valence of +2 or +3. Concrete examples of the element having a valence of +2 are Mg, Ca, Zn, and the like. Concrete examples of the element having a valence of +3 are Al, Y, and the like. Y is more preferable.

An element M substituting the Fe site is a typical metal element or a transition metal element. Y, Al, and the like are examples of the element M which is a typical metal element or a transition metal element and takes a single valence. According to the arrangement, the valence of the element M does not vary. This makes it possible to stably synthesize the cathode active material. Ti, V, Nb, W, and the like are examples of a metal element M which takes a plurality of valences. The arrangement makes it possible to further suppress the expansion/shrinkage. This makes it possible to provide a cathode active material which gives a longer life to a battery.

The element M substituting the Fe site is preferably an element having a valence of +3 or +4. Concrete examples of the element having a valence of +3 are Al, Y, Ti, V, Cr, Mo, Nb, and the like. In a case where the element M is the element having a valence of +3, a metal element which takes a single valence is preferable for prevention of a decrease in average electric potential. Among the concrete examples, Y is particularly preferable. On the other hand, in a case where the prevention of the expansion/shrinkage rate is a top priority, a metal element which takes a plurality of valences is preferable. Particularly, Nb and V are preferable. Concrete examples of the element having a valence of +4 are Zr, Ti, V, Hf, Nb, Mo, W, Sn, and the like. In a case where the element M is one having a valence of +4, a metal element which takes a single valence is preferable for the prevention of the decrease in average electric potential. Particularly, Zr and Sn are preferable. In a case where the prevention of the expansion/ shrinkage rate is a top priority, a metal element which takes a plurality of valences is preferable. Particularly, Nb, V, and W are preferable which are capable of taking a high valence of not less than +5.

In a case where the Li-site substitution and the Fe-site substitution are both performed, and the Li site is substituted with Na or K, the Fe site is preferably substituted with Sn, Ti, V, or W. Sn and W are especially preferable. In a case where the Li site is substituted with Mg, Ca, or Zn, it is especially preferable that the Fe site is substituted with Y.

In the present embodiment, a volumetric change rate is not more than 4% between a volume of a unit lattice made in a case where k is equal to (1-x) and a volume of a unit lattice made in a case where k is equal to (y-x), where "k" represents Li content in the general formula (1). Note that "k" is zero if y-x<0.

This is because, the cathode active material of the present embodiment shows a capacity maintenance ratio that is plotted against the volumetric change rates of the unit lattice (i.e., volumetric expansion/ shrinkage rates of volumetric changes due to charging/discharging) with a gradient that changes when the volumetric change rate reaches approximately 4%, as is shown in Fig. 1 which shows results in Examples to be described later. In other words, a degree of decrease in the capacity maintenance ratio becomes higher relative to an increase in the volumetric change rate when the volumetric change rate becomes higher than approximately 4%. Therefore, the decrease in the capacity maintenance ratio can be further suppressed when the range of volumetric change rate is 4% or less.

In a viewpoint of keeping the volumetric change rate at 4% or less, "z" of the general formula (1) preferably satisfies $0 < z \leq 0.25$, or more preferably, satisfies $0.05 \leq z \leq 0.25$. The Li-site substitution and the Fe-site substitution are preferably both performed. Because of this, the capacity decrease due to the substitution can be suppressed as small as possible while the volumetric expansion/shrinkage due to charging/discharging can be suppressed.

In a case where the Li-site substitution and the Fe-site substitution are both performed, and the element M is a metal element which takes a single valence, some Li do not undergo the insertion and desorption, depending on the amount of the Fe-site substitution. Therefore, substituting such Li with another element makes it possible to further suppress the volumetric expansion/shrinkage. For this reason, the amount of the Li-site substitution is preferably equal to that of the Fe-site substitution (i.e., $x=y$). It is not preferable that the amount of the Li-site substitution be larger than that of the Fe-site substitution because the Li content of the unit lattice decreases, and thereby Li atoms which contribute to the charging/discharging decrease. In addition, it is not preferable that an amount of the Fe-site substitution be larger than that of the Li-site substitution because an amount of Li increases which does not undergo insertion/desorption caused by charging/discharging.

In a case where the Li site is substituted with an element having a valence of +3, and the Fe site is substituted with an element having a valence of +2, according to the principle that a total electric charge in a structure is zero, a relation between x and z of the general formula (1) is represented by: $x=z$. In this case, the element substituting the Fe site does not contribute to the charge compensation. Therefore, y of the general formula (1) can take any value satisfying $0 \leq y \leq 0.25$. However, $y \leq x=z$ is preferably satisfied, in order that the expansion/ shrinkage rate may be suppressed as much as possible, and the capacity may be increased as high as possible. It is especially preferable that $x=y=z$ be satisfied, in order that the expansion/shrinkage rate may be suppressed as much as possible, and the capacity may be increased as high as possible.

In a case where the Li site is substituted with an element having a valence of +2, and the Fe site is substituted with an element having a valence of +3, a relation among x, y, and z of the general formula (1) is represented by: $x+y=2z$, according to the principle that a total electric charge in a structure is zero. In this case, $x=y$ is preferably satisfied in order that the battery capacity may be increased as high as possible.

In a case where the Li site is substituted with an element having a valence of +1, and the Fe site is substituted with an element having a valence of +4, a relation between x and y of the general formula (1) is represented by $y=z$. In this case, an element substituting the Li site does not contribute to the charge compensation. Therefore, x can be any value satisfying $0 \leq x \leq 0.25$. However, for further suppressing the expansion/shrinkage rate, and attaining a higher capacity, $0 < x \leq y=z$ is satisfied. It is especially preferable that $x=y=z$ be satisfied. The element A having a valence of +1 is preferably at least one selected from the group consisting of Na and K.

In a case where the Li-site substitution and the Fe-site substitution are both performed, it is possible to change structural stability by adjusting a positional relation between two atoms. This makes it possible to realize a superlattice structure by realizing a constant positional relation between the two atoms.

The cathode active material of the present embodiment can be produced from the elements that are arbitrarily in form of a carbonate, a hydroxide, a chloride, a sulfate, an acetate, an oxide, an oxalate, a nitrate, and/or the like. A manufacturing method of the cathode active material can be a solid-phase method, a sol-gel method, a melt quenching method, a mechanochemical method, a coprecipitation method, a hydrothermal method, a spray-pyrolysis method, etc. In addition, electrical conductivity of the cathode active material may be improved by attaching a carbon film to the cathode active material, as is commonly performed in the case of the lithium iron phosphate having an olivine structure.

(II) Nonaqueous secondary battery

A nonaqueous secondary battery of the present embodiment includes a cathode, an anode, an electrolyte, and a separator. The following describes respective materials.

(a) Cathode

The cathode is made up of the cathode active material of the present embodiment, an electrical conducting material, and a binder. The cathode can be made by, e.g., a publicly known method such one in which a slurry made by mixing an active material, an electrical conducting material, and a binder with an organic solvent is applied to a current collector.

Examples of the binder encompass: polytetrafluoroethylene; polyvinylidene-fluoride; polyvinylchloride, ethylene-propylene-diene polymer; styrene-butadiene rubber; acrylonitrile-butadiene rubber; fluoro-rubber; polyvinyl acetate;

polymethylmethacrylate; polyethylene; and nitrocellulose.

Examples of the electrical conducting material encompass: acetylene black; carbon; graphite; natural graphite; artificial graphite; and needle coke.

Examples of the current collector encompass: a foam (porous) metal having contiguous holes; a honeycomb metal; a sintered metal; an expanded metal; nonwoven fabric; a plate; a foil; and a plate or a foil with holes.

Examples of the organic solvent encompass: N-methylpyrrolidone; toluene; cyclohexane; dimethylformamide; dimethylacetamide; methylethyl ketone; methyl acetate; methyl acrylate; diethyltriamine; N-N-dimethylaminopropylamine; ethylene oxide; and tetrahydrofuran.

The cathode preferably has a thickness from approximately 0.01 to approximately 20mm. A too thick cathode is not preferable because it has a low electrical conductivity. Meanwhile, a too thin cathode is not preferable because it has a low capacity per unit area. The cathode made through application of the slurry and drying may be adhered by, e.g., application of a pressure with the use of a roller.

(b) Anode

The anode can be made by a publicly known method. Specifically, the anode can be made in the same manner as that of the method of making the cathode. Specifically, first, mixed powder is made by mixing (i) the publicly known binder, (ii) the publicly known electrical conducting material, which are described above in the description of the method of making the cathode, and (iii) an anode active material. The mixed powder is formed into a sheet. Then, the sheet is fixed to a conductive material mesh (current collector) made of a metal such as stainless steel or copper. Alternatively, the anode can be also made by applying, onto a metal substrate made of a metal such as copper, a slurry made by mixing the mixed powder with the publicly known organic solvent described in the description of the method of making the cathode.

A publicly known material can be used as the anode active material. For realization of a high-energy density battery, it is preferable to employ an anode active material whose electric potential at which Li insertion/desorption occur is close to one at which precipitation and dissolution of metal lithium occur. Typical examples of the anode active material are carbon materials such as particulate (e.g., scale-like, aggregated, fibrous, whisker-like, spherical, or pulverized-particle-like) natural or artificial graphite.

Examples of the artificial graphite encompass graphite obtained by graphitizing mesocarbon microbeads, a mesophase pitch powder, or an isotropic pitch powder. Alternatively, a graphite particle having a surface on which amorphous carbon is adhered can be used. Among them, the particulate natural graphite is more preferable. This is because the particulate natural graphite makes it possible to realize a high-energy density battery for the reason that the particulate natural graphite is inexpensive and undergoes Li insertion/desorption at an electric potential close to a redox potential of lithium.

Alternatively, the anode active material can be a lithium transition metal oxide, a lithium transition metal nitride, a transition metal oxide, oxide silicon, or the like. Among them, $Li_4Ti_5O_{12}$ is more preferable because it has a high flatness of an electric potential, and undergoes a smaller volumetric change caused by charging/ discharging.

(c) Electrolyte

Examples of the electrolyte encompass: an organic electrolytic solution; a gel-like electrolyte; a polymer solid electrolyte; an inorganic solid electrolyte; and a molten salt. After the electrolyte is introduced in a battery via an opening, the opening of the battery is sealed. It may be arranged such that before the opening is sealed, the electrolyte is electrified and a gas generated as a result of the electrification is removed.

Examples of an organic solvent which makes up of the organic electrolyte solution encompass: cyclic carbonates such as propylene carbonate (PC), ethylene carbonate (EC), and butylene carbonate; chain carbonates such as dimethyl carbonate (DMC), diethyl carbonate (DEC), ethylmethyl carbonate, and dipropyl carbonate; lactones such as γ-butyrolactone (GBL) and γ-valerolactone; furans such as tetrahydrofuran and 2-methyltetrahydrofuran; ethers such as diethyl ether, 1,2-dimethoxyethane, 1,2-diethoxyethane, ethoxymethoxyethane, and dioxane; dimethylsulfoxide; sulfolane; methylsulfolane; acetonitrile; methyl formate; and methyl acetate. One of the examples can be singly used, or alternatively, two or more of the examples can be mixed so as to be used as the organic solvent.

The cyclic carbonates such as PC, EC, and butylene carbonate are suitable as a solvent to be mixed with GBL because the cyclic carbonates are high boiling point solvents.

Examples of an electrolyte salt which makes up of the organic electrolyte solution encompass: lithium salts such as lithium borofluoride ($LiBF_4$), lithium hexafluorophosphate ($LiPF_6$), lithium trifluoromethanesulfonate ($LiCF_3SO_3$), lithium trifluoroacetate ($LiCF_3COO$), lithium-bis(trifluoromethanesulfonate)imide($LiN(CF_3SO_2)_2$). One of the examples can be singly used, or alternatively, two or more of the examples can be mixed so as to be used as the electrolyte salt. A salt concentration of the electrolyte solution is preferably in a range from 0.5mol/l to 3mol/l.

(d) Separator

Examples of the separator encompass a porous material and unwoven fabric. A preferable material of the separator is one which does not dissolve or swell in the organic solvent contained in the electrolyte. Concrete examples of the preferable material encompass inorganic materials such as a polyester polymer, polyolefin polymer (e.g., polyethylene and polypropylene), ether polymer, and glass.

A battery according to the present embodiment is not particularly limited in terms of its components such as the separator, a battery casing, and structural materials, and may be such that its components are made of well-known materials conventionally used in a nonaqueous electrolyte secondary battery.

(e) Method for Manufacturing Nonaqueous Secondary Battery

The nonaqueous secondary battery of the present embodiment can be made in, e.g., such a manner that the cathode and the anode are stacked in lamination with the separator sandwiched therebetween. The lamination of cathode and the anode may have a planar strip shape for example. In a case where the nonaqueous secondary battery has a cylindrical or a flat shape, the lamination of the cathode and the anode can be shaped in a circle.

Inside the battery casing, one or a plurality of such lamination is provided. Usually, the cathode and the anode are connected to respective external conductive terminals of the nonaqueous secondary battery. Then, the battery casing is hermetically sealed so that the cathode, the anode, and the separator cannot have contact with an external air.

In the case of a cylindrical battery, the sealing is usually performed by fitting a lid having a resin gasket to an opening of the battery casing so as to seal the battery casing. In the case of a square battery, a battery casing can be hermetically sealed by a method in which a metal lid called a sealing plate is attached to an opening, and the lid is fixed to the battery casing by welding. In addition to the methods, the battery casing can be hermetically sealed by a method using a binder or by a method in which a lid is fixed to the battery casing by using a bolt and sealing a gap with a gasket. Further, the battery casing can be hermetically sealed by using a laminate film in which a thermoplastic resin is attached to a metal foil. An opening for introducing the electrolyte can be provided at sealing the battery casing.

The present invention thus described can be expressed as below:

(A) A nonaqueous secondary battery, comprising a cathode; an anode, and an electrolyte; a separator, and the cathode being made from a cathode active material being represented by the general formula (1):

$$Li_{1-x}A_xFe_{1-y}M_yP_{1-z}Al_zO_4 \qquad (1)$$

where A is as defined; M is as defined; and $0 \leq x \leq 0.25$, $0 \leq y \leq 0.25$, $0 < z \leq 0.25$, and $x+y>0$.

(B) A battery as set forth in (A) wherein the cathode active material has a volumetric change rate of 4% or lower between a volume of a unit lattice made in a case where $k = (1-x)$ and a volume of a unit lattice made in a case where $k = (y-x)$, wherein $k = 0$ if $y-x<0$, where $k$ represents Li content in the general formula (1).

(C) A battery as set forth in (A) wherein the cathode active material is such that $(a-1)x+(m-2)y-2z \leq 0$ where $a$ is a valence of A of the general formula (1), and $m$ is a valence of M of the general formula (1).

(D) A battery as set forth in any one of (A) to (C) wherein the cathode active material is such that $0.05 \leq z \leq 0.25$.

(E) A battery as set forth in any one of (A) to (D) wherein the cathode active material is such that M has a valence of +4.

(F) A battery as set forth in (E) wherein the cathode active material is such that A has a valence of +1.

(G) A battery as set forth in (E) or (F) wherein the cathode active material is such that $0<x \leq y=z$.

(H) A battery as set forth in (E) wherein the cathode active material is such that M is a typical metal element.

(I) A battery as set forth in (H) wherein the cathode active material is such that M is Sn.

(J) A battery as set forth in (E) wherein the cathode active material is such that M is a transition metal element.

(K) A battery as set forth in (J) wherein the cathode active material is such that M is at least one selected from the group consisting of Zr, V, Nb, and W.

(L) A battery as set forth in (F) wherein the cathode active material is such that A is at least either Na or K.

(M) A battery as set forth in (A) to (D), wherein the cathode active material is such that A has a valence of +2.

(N) A battery as set forth in (M) wherein the cathode active material is such that M has a valence of +3.

(O) A battery as set forth in any one of (A) to (D), (M), and (N), wherein the cathode active material is such that $x=y$.

(P) A battery as set forth in (M) wherein the cathode active material is such that A is at least one selected from the group consisting of Mg, Ca, and Zn.

(Q) A battery as set forth in (N), wherein the cathode active material is such that M is a metal element which takes a single valence.

(R) A battery as set forth in (Q) wherein the cathode active material is such that M is at least one of Y and Al.

(S) A battery as set forth in (N), wherein the cathode active material is such that M is a transition metal element.

(T) A battery as set forth in (S) wherein the cathode active material is such that M is at least one selected from the group consisting of Ti, V, Nb, and W.

(U) A battery as set forth in any one of (A) to (D) wherein the cathode active material is such that A has a valence of +3.

(V) A battery as set forth in (U) wherein the cathode active material is such that A is Y.

The cathode active material of the present invention is preferably arranged such that a volumetric change rate is 4% or lower between a volume of a unit lattice made in a case where k=(1-x) and a volume of a unit lattice made in a case where k=(y-x) wherein k=0 if y-x<0, where k represents Li content in the general formula (1).

The volumetric change rate is found by the following formula:

$$\text{Volumetric change rate (\%)} = \{1-(\text{Volume of unit lattice without Li (k=y-x)}) / (\text{volume of unit lattice with Li (k=1-x)})\} \times 100.$$

According to the arrangement, the volumetric change rate is 4% or lower between the volume of the unit lattice made in the case where k = (1-x) and the volume of a unit lattice made in the case where k = (y-x), wherein k = 0 if y-x<0, where k is the Li content in the general formula (1).

The arrangement makes it possible to further suppress a decrease in capacity maintenance ratio. This makes it possible to provide a cathode active material which makes it possible to provide a battery which not only excels in safety and cost but also has a long life.

Further, the cathode active material of the present invention is preferably arranged such that $(a-1)x+(m-2)y-2z\leq0$ where a is a valence of A of the general formula (1), and m is a valence of M of the general formula (1).

The arrangement maintains a total electric charge at zero in a structure so that a stable structure is formed.

Further, the cathode active material of the present invention is preferably arranged such that $0.05\leq z\leq0.25$.

The arrangement makes it possible to further suppress the volumetric expansion/ shrinkage caused by charging/ discharging.

Further, the cathode active material of the present invention is preferably arranged such that M has a valence of +4. In this case, more preferably, A has a valence of +1.

This makes it possible to provide a cathode active material in which the volumetric expansion/shrinkage is further suppressed, thereby giving a longer life to batteries.

Further, the cathode active material of the present invention is preferably arranged such that $0<x\leq y=z$ in a case where M has a valence of +4 and A has a valence of +1.

The arrangement much further suppresses the volumetric expansion/shrinkage rate so that a battery utilizing the cathode active material has a capacity as large as possible.

Further, in a case where M has a valence of +4, the cathode active material of the present invention can be arranged such that M is a metal element which takes a single valence. The metal element can be Zr or Sn.

According to the arrangement, M does not change in its valence. This further makes it possible to stably synthesize the cathode active material.

Further, in a case where M has a valence of +4, the cathode active material of the present invention can be arranged such that M is a metal element which takes a plurality of valences. The metal element can be at least one selected from the group consisting of V, Nb, and W.

The arrangement makes it possible to provide a cathode active material which further suppresses the volumetric expansion/shrinkage, thereby giving a longer life to batteries.

Further, the cathode active material of the present invention is preferably arranged such that A having a valence of +1 is at least either Na or K.

The arrangement makes it possible to provide a cathode active material which can give a longer life to batteries.

Further, the cathode active material of the present invention is preferably arranged such that A has a valence of +2. In this case, further preferably, M has a valence of +3.

The arrangement provides a cathode active material in which the volumetric expansion/shrinkage is further suppressed, thereby giving a longer life to batteries.

Further, the cathode active material of the present invention is preferably arranged such that x=y.

The arrangement makes it possible to provide a cathode active material which (i) is small in capacity decrease that will be caused due to substitution, (ii) the volumetric expansion/shrinkage is further suppressed, and (iii) gives a longer life to batteries.

Further, the cathode active material of the present invention can be arranged such that A having a valence of +2 is at least one selected from the group consisting of Mg, Ca, and Zn.

The arrangement provide a cathode active material in which the volumetric expansion/shrinkage is further suppressed, thereby giving a longer life to batteries.

Further, the cathode active material of the present invention can be arranged such that M is a metal element which takes a single valence. The metal element M can be at least either Y or Al. Examples of the metal element which takes a single valence are metal elements whose valence is constant in general knowledge.

The metal element is any one of the following of the group 2: Sc, Y, Zr, Sn, Hf, Zn, Cd, B, Al, Ga, In, C, and Si. Hereinafter, "element which takes a single valence" refers to such elements.

According to the arrangement, M does not change in its valence. This further makes it possible to stably synthesize the cathode active material.

Further, the cathode active material of the present invention can be arranged such that M is a metal element which takes a plurality of valences. The metal element can be at least one selected from the group consisting of Ti, V, Nb, and W. Examples of the metal element which takes a plurality of valences are the metal elements whose valence is variable in general knowledge. The metal element is then one except those which take a single valence. Hereinafter, "element which takes a plurality of valences" refers to such elements.

The arrangement makes it possible to provide a cathode active material in which the volumetric expansion/ shrinkage is further suppressed, thereby giving a longer life to batteries.

Further, the cathode active material of the present invention is preferably arranged such that A has a valence of +3. A having a valence of +3 is preferably Y.

The arrangement makes it possible to suppress a decrease in average electric potential of a battery utilizing the cathode active material.

In order to attain the object, a cathode of the present invention includes: a cathode active material of the present invention; an electrical conducting material; and a binder.

According to the arrangement, the cathode includes the cathode active material of the present invention. This makes it possible to provide a cathode which not only excels in safety and cost but also gives a longer life to a longer life to batteries.

In order to attain the object, a nonaqueous secondary battery of the present invention includes: the cathode of the present invention; an anode; an electrolyte; and a separator.

According to the arrangement, the nonaqueous secondary battery includes the cathode of the present invention. This makes it possible to provide a battery which not only excels in safety and cost but also has a long life.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

[Examples]

The following describes the present invention in more detail, on the basis of the Examples below. It should be noted that the present invention is not limited to the Examples. Reagents etc. used in the Examples were special grade reagents made by Kishida Chemical Co., Ltd., unless otherwise specified.

ICP emission spectral analysis was used to confirm that cathode active materials obtained in the Examples and Comparative Examples had their target compositions (element ratios).

<Method for Synthesizing Precursor of Cathode Active Material>

Starting materials and 65g pf zirconia balls having a diameter of 1mm were put in a zirconia pot. Then, a precursor was synthesized by using a bench-top ball mill (PlanetM2-3 made by Gokin Planetaring Inc). The ball milling was performed at 400rpm to 600rpm for 10 to 50 hours, thereby obtaining an amorphous precursor.

<Expansion/shrinkage Rate of Cathode Active Material>

A cathode active material was grinded into fine powder in a mortar. Lattice constants were found by performing X-ray measurement of the fine powder from 10° to 90° at a room temperature by using a Cu tube.

In addition, lattice constants of a post-Li desorption active material were found by performing, at a room temperature, X-ray measurement of a cathode active material having the same composition as that of a cathode active material whose Li desorption had been confirmed from a charging capacity. Specifically, a fully-charged cathode was taken out from a battery made by a method to be described later, and then, the cathode was washed with ethanol. After that, the X-ray measurement was carried out by XRD measurement on the post-Li desorption cathode active material.

A volumetric expansion/shrinkage rate (%) due to charging/discharging was determined from the following formula:

$$\texttt{Volumetric expansion/shrinkage rate (\%) = (1-volume}$$

$$\texttt{of charged structure/volume of discharged structure)} \times$$

$$\texttt{100}$$

where the volume of the charged structure and the volume of the discharged structure were obtained from lattice constants of the respective structures.

The charged structure is assumed to be a structure during the Li desorption. Meanwhile, the discharged structure is assumed to be an initial structure as originally synthesized.

<Method for Making Battery>

A cathode active material, acetylene black (product name: "Denka Black," made by Denki Kagaku Kogyo Kabushiki Kaisha), and PVdF (polyvinylidene-fluoride, product name: "KF Polymer," made by Kureha Corporation) were mixed at a ratio of 100:5:5. A mixture thus prepared was further mixed with N-methylpyrrolidone (made by Kishida Chemical Co., Ltd.) so as to be a slurry mixture. The slurry mixture was applied to a $20\mu$m thick aluminum foil so that the aluminum foil had a thickness from $50\mu$m to $100\mu$m. In this way, a cathode was prepared. A size thereof was 2 centimeters square.

Then, the cathode was dried. The dried cathode and a counter electrode (lithium metal) were soaked in 50ml of an electrolytic solution in a 100 ml glass vessel. The electrolytic solution (made by Kishida Chemical Co., Ltd.) was one made as below. In a solvent made by mixing ethylene carbonate and diethyl carbonate at a volume ratio of 7:3, $LiPF_6$ was dissolved to make up a concentration of 1.4mol/l.

<Capacity Maintenance Ratio>

A capacity maintenance ratio was found by performing a cycle test in which the battery thus made underwent charging and discharging repeatedly at a current density of 0.2mA/cm$^2$. The charging was performed in such a manner that a constant current charging mode was switched to a constant voltage charging mode at a voltage of 3.8V, and the battery was charged until a current value decreased to 1/10 of that of constant current charging. The discharging was carried out in such a manner that the battery was discharged down to a voltage of 2.25V with a constant current. The capacity maintenance ratio was determined from a capacity after 300 cycles, by the following equation:

$$\texttt{Capacity maintenance ratio (\%) = (service capacity}$$

$$\texttt{after 300 cycles) / (initial discharged capacity)}$$

[Example 1]

Starting materials used in Example 1 are as follows: $Li_2CO_3$ as a lithium source; $FeC_2O_4$ as an iron source; $ZrO_2$ as a zirconium source; $(NH_4)_2HPO_4$ as a phosphorous source; and $Al(OH)_3$ as an aluminum source. There starting materials were mixed together at a ratio of Li:Fe:Zr:P:Al=1:0.75:0.25:0.75:0.25. Then, precursor synthesis described above was performed with the mixed starting materials, so as to obtain an amorphous precursor. The amorphous precursor was calcinated at 650°C for 6 hours in a nitrogen atmosphere. Thus synthesized was a single-phase powder $LiFe_{0.75}Zr_{0.25}P_{0.75}Al_{0.25}O_4$ which was a cathode active material having an olivine structure. Results of the above measurements on the cathode active material are shown on Table 1.

[Example 2]

Starting materials used in Examples 2 were as follows: $Li_2CO_3$ as a lithium source; KOH as a potassium source;

$FeC_2O_4$ as an iron source; $WO_3$ as a tungsten source; $(NH_4)_2HPO_4$ as a phosphorous source, and $Al(OH)_3$ as an aluminum source. The starting materials were mixed together at a ratio of Li:K:Fe:W:P:Al=0.875:0.125:0.875:0.125:0.875:0.125. Then, the precursor synthesis described above was performed with the mixed starting materials, so as to obtain an amorphous precursor. The amorphous precursor was calcinated at 650°C for 6 hours in a nitrogen atmosphere. Thus synthesized was a single-phase powder $Li_{0.875}K_{0.125}Fe_{0.875}W_{0.125}P_{0.875}Al_{0.125}O_4$ which was a cathode active material having an olivine structure. Results of the above measurements on the cathode active material are shown on Table 1.

[Example 3]

Starting materials used in Examples 2 were as follows: $Li_2CO_3$ as a lithium source; NaOH as a sodium source; $FeC_2O_4$ as an iron source; $SnO_2$ as a tin source; $(NH_4)_2HPO_4$ as a phosphorous source; and $Al(OH)_3$ as an aluminum source. The starting materials were mixed together at a ratio of Li:Na:Fe:Sn:P:Al=0.75:0.25:0.75:0.25:0.75:0.25. Then, the precursor synthesis described above was performed with the mixed starting materials, so as to obtain an amorphous precursor. The amorphous precursor was calcinated at 650°C for 6 hours in a nitrogen atmosphere. Thus synthesized was a single-phase powder $Li_{0.75}Na_{0.25}Fe_{0.75}Sn_{0.25}P_{0.75}Al_{0.25}O_4$ which was a cathode active material having an olivine structure. Results of the above measurements on the cathode active material are shown on Table 1.

[Example 4]

Starting materials used in Examples 4 were as follows: $Li_2CO_3$ as a lithium source; $Ca(OH)_2$ as a calcium source; $FeC_2O_4$ as an iron source; $Y_2(CO_3)_3$ as an yttrium source; $(NH_4)_2HPO_4$ as a phosphorous source; and $Al(OH)_3$ as an aluminum source. The starting materials were mixed together at a ratio of Li:Ca:Fe:Y:P:Al=:0.75:0.25:0.75:0.25:0.75:0.25. Then, the precursor synthesis described above was performed with the mixed starting materials, so as to obtain an amorphous precursor. The amorphous precursor was calcinated at 650°C for 6 hours in a nitrogen atmosphere. Thus synthesized was a single-phase powder $Li_{0.75}Ca_{0.25}Fe_{0.75}Y_{0.25}P_{0.75}Al_{0.25}O_4$ which was a cathode active material having an olivine structure. Results of the above measurements on the cathode active material are shown on Table 1.

[Example 5]

Starting materials used in Examples 5 were as follows: $Li_2CO_3$ as a lithium source; $Y_2(CO_3)_3$ as an yttrium source; $FeC_2O_4$ as an iron source; $(NH_4)_2HPO_4$ as a phosphorous source; and $Al(OH)_3$ as an aluminum source. The starting materials were mixed together at a ratio of Li:Y:Fe:P:Al=0.75:0.25:1:0.75:0.25. Then, the precursor synthesis described above was performed with the mixed starting materials, so as to obtain an amorphous precursor. The amorphous precursor was calcinated at 650°C for 6 hours in a nitrogen atmosphere. Thus synthesized was a single-phase powder $Li_{0.75}Y_{0.25}FeP_{0.75}Al_{0.25}O_4$ which was a cathode active material having an olivine structure. Results of the above measurements on the cathode active material are shown on Table 1.

[Comparative Example 1]

$Li_2CO_3$ which was a starting material and a lithium source, $FeC_2O_4$ which was as an iron source, $Y_2(CO_3)_3$ which was an yttrium source, $(NH_4)_2HPO_4$ which was a phosphorous source, $Al(OH)_3$ which was an aluminum source were mixed at a ratio of Li:Fe:Y:P:Al=1:0.6:0.4:0.8:0.2. Then, the precursor synthesis described above was performed. An amorphous precursor obtained was calcinated at 650°C for 6 hours in a nitrogen atmosphere. Thus synthesized was a single-phase powder $LiFe_{0.6}Y_{0.4}P_{0.8}Al_{0.2}O_4$ which was a cathode active material having an olivine structure. Table 1 shows measurement results.

[Comparative Example 2]

$Li_2CO_3$ which was a starting material and a lithium source, $FeC_2O_4$ which was as an iron source, $(NH_4)_2HPO_4$ which was a phosphorous source, $Al(OH)_3$ which was an aluminum source were mixed at a ratio of Li:Fe:P:Al=0.75:1:0.75:0.5. Then, the precursor synthesis described above was performed. An amorphous precursor obtained was calcinated at 650°C for 6 hours in a nitrogen atmosphere. Thus synthesized was a single-phase powder $Li_{0.75}Al_{0.25}FeP_{0.75}Al_{0.25}O_4$ which was a cathode active material having an olivine structure. Table 1 shows measurement results.

[Table 1]

| | Composition[*1] | a-axis (Å) | b-axis (Å) | c-axis (Å) | Expansion/ shrinkage ratio (%) | Capacity maintenance ratio (%) | Initial discharged capacity (mAh/g) |
|---|---|---|---|---|---|---|---|
| Ex. 1 | $LiFe_{0.75}Zr_{0.25}P_{0.75}Al_{0.25}O_4$ | 10.536 | 6.084 | 4.825 | 2.96 | 91.3 | 93.8 |
| | $Li_{0.25}Fe_{0.75}Zr_{0.25}P_{0.75}Al_{0.25}O_4$ | 10.366 | 5.945 | 4.871 | | | |
| Ex. 2 | $Li_{0.875}K_{0.125}Fe_{0.875}W_{0.125}P_{0.875}Al_{0.125}O_4$ | 10.576 | 6.034 | 4.787 | 3.79 | 90.8 | 100.0 |
| | $K_{0.125}Fe_{0.875}W_{0.125}P_{0.875}Al_{0.125}O_4$ | 10.308 | 5.872 | 4.855 | | | |
| Ex. 3 | $Li_{0.75}Na_{0.25}Fe_{0.75}Sn_{0.25}P_{0.75}Al_{0.25}O_4$ | 10.477 | 6.056 | 4.875 | 2.63 | 92.2 | 92.0 |
| | $Na_{0.25}Fe_{0.75}Sn_{0.25}P_{0.75}Al_{0.25}O_4$ | 10.330 | 5.924 | 4.921 | | | |
| Ex. 4 | $Li_{0.75}Ca_{0.25}Fe_{0.75}Y_{0.25}P_{0.75}Al_{0.25}O_4$ | 10.703 | 6.200 | 4.876 | 2.25 | 94.2 | 91.3 |
| | $Ca_{0.25}Fe_{0.75}Y_{0.25}P_{0.75}Al_{0.25}O_4$ | 10.729 | 5.979 | 4.931 | | | |
| Ex. 5 | $Li_{0.75}Y_{0.25}FeP_{0.75}Al_{0.25}O_4$ | 10.529 | 6.097 | 4.768 | 2.76 | 92.4 | 92.5 |
| | $Y_{0.25}FeP_{0.75}Al_{0.25}O_4$ | 10.362 | 5.959 | 4.820 | | | |
| Comparative Ex. 1 | $LiFe_{0.6}Y_{0.4}P_{0.8}Al_{0.2}O_4$ | 10.579 | 6.159 | 4.804 | 3.81 | 89.4 | 70.0 |
| | $Li_{0.6}Fe_{0.6}Y_{0.4}P_{0.8}Al_{0.2}O_4$ | 10.280 | 6.036 | 4.852 | | | |
| Comparative Ex. 2 | $Li_{0.75}Al_{0.25}FeP_{0.75}Al_{0.25}O_4$ | 10.467 | 6.060 | 4.755 | 5.55 | 81.1 | 87.2 |
| | $Al_{0.25}FeP_{0.75}Al_{0.25}O_4$ | 10.536 | 6.084 | 4.825 | | | |
| *1: Upper line: discharged structure; lower line: charged structure | | | | | | | |

Fig. 1 is a graph showing changes in capacity maintenance ratio of cathode active materials made in the Examples with respect to respective volumetric expansion/shrinkage rates thereof.

As shown in Fig. 1, a capacity maintenance ratio decreased under 90% when a volumetric expansion/shrinkage rate of approximately 4% was exceeded. From the fact, it was confirmed that it is preferable that the cathode active material of the present embodiment have a volumetric expansion/shrinkage rate or approximately 4% or less.

In the case of, e.g., the result of the Comparative Example 2 indicated by the rightmost point in Fig. 1, the volumetric expansion/ shrinkage rate was 5.55% which is higher than 4%. In this case, the capacity maintenance ratio was 81.1%. Therefore, such a volumetric expansion/shrinkage rate is not preferable because it leads to a capacity maintenance ration lower than 90%.

Fig. 2 is a graph in which the vertical axis represents initial discharged capacities and the horizontal axis represents greater one of a substituted amount of Li-site substitution and that of Fe-site substitution (i.e., The horizontal axis represents those indicated by x or y whichever is greater. Hereinafter, referred to as "substituted amounts n").

As shown in Fig. 2, Li which did not contribute to insertion/desorption increased with an increase of the substituted amount n. Accordingly, the initial discharged capacity of the battery decreased. A substituted amount n of 0.25 or more is not preferable for the reason that an initial discharged capacity decreases to 90mAh/g or less.

In the case of, e.g., the result of the comparative Example 1 indicated by the rightmost point in Fig. 2, X was 0 and Y was 0.4. Accordingly, a substituted amount n was 0.4 which was more than 0.25. Accordingly, an initial discharged capacity was under 70.0mAh/g. Thus, such a substituted amount n is not preferable because it leads to an initial discharge capacity lower than 90mAh/g.

In the comparative example 2, Al was used instead of Y in the cathode active material of the example 5. From the result of the comparative example 2, it was confirmed that the comparative example 2 was poorer in suppressing volumetric expansion/ shrinkage rate than the example 5. In other words, the cathode active material of the example 5 was superior to that of the comparative example 2.

Industrial Applicability

The cathode active material of the present invention not only excels in safety and cost but also makes it possible to provide a long-life battery. Therefore, the cathode active material is suitably applicable to a cathode active material of a nonaqueous secondary battery such as a lithium-ion battery.

**Claims**

1. A cathode active material represented by the general formula (1):

$$Li_{1-x}A_xFe_{1-y}M_yP_{1-z}Al_zO_4 \qquad (1)$$

wherein A is at least one selected from a metal element or transitional metal element having a valence of + 1, +2 or +3, preferably selected from the group consisting of Na, K, Mg, Ca, Zn, Al, Y;

M is at least one selected from a metal element or a transition metal element having a valence of +3, +4, or +5, preferably selected from the group consisting of Al, Y, Ti, V, Cr, Mo, Nb, Zr, Hf, W, Sn, Sc, Zn, Cd, B, Ga, In, C, and Si and $0 \leq x \leq 0.25$, $0 \leq s\, y \leq 0.25$, $0 < z \leq 0.25$, and $x + y > 0$,

in case A has a valence of +1, it applies: $0 < x\, s\, y = z$.

2. The cathode active material as set forth in claim 1, wherein a volumetric change rate is 4% or lower between a volume of a unit lattice made in a case where $k = (1 - x)$ and a volume of a unit lattice made in a case where $k = (y - x)$ wherein $k = 0$ if $y - x < 0$, where k represents Li content in the general formula (1).

3. The cathode active material as set forth in claim 1, wherein

$$(a - 1)\, x + (m - 2)\, y - 2z \leq 0$$

where a is a valence of A of the general formula (1), and m is a valence of M of the general formula (1).

4. The cathode active material as set forth in any one of claims 1 through 3, wherein $0.05 \leq z \leq 0.25$.

**5.** The cathode active material as set forth in claim 1, wherein M has a valence of +3 and x = y.

**6.** A cathode comprising:

a cathode active material recited in any one of claims 1 through 5;
an electrical conducting material; and
a binder.

**7.** A nonaqueous secondary battery comprising:

a cathode recited in claim 6;
an anode;
an electrolyte; and
a separator.


**Patentansprüche**

**1.** Aktives Kathodenmaterial, dargestellt durch die allgemeine Formel (1):

$$Li_{1-x}A_xFe_{1-y}M_yP_{1-z}Al_zO_4 \qquad (1)$$

worin A mindestens eines darstellt, ausgewählt aus einem Metallelement oder einem Übergangsmetallelement mit einer Valenz von +1, +2 oder +3, bevorzugt ausgewählt aus der Gruppe, bestehend aus Na, K, Mg, Ca, Zn, Al, Y; M ist mindestens eines, ausgewählt aus einem Metallelement oder einem Übergangsmetallelement mit einer Valenz von +3, +4 oder +5, bevorzugt ausgewählt aus der Gruppe, bestehend aus Al, Y, Ti, V, Cr, Mo, Nb, Zr, Hf, W, Sn, Sc, Zn, Cd, B, Ga, In, C und Si, und $0 \leq x \leq 0,25$, $0 \leq y \leq 0,25$, $0 < z \leq 0,25$ und x+y > 0, im Falle, dass A eine Valenz von + 1 aufweist, gilt: $0 < x \leq y = z$.

**2.** Aktives Kathodenmaterial nach Anspruch 1, wobei die volumetrische Änderungsrate 4% oder weniger beträgt, zwischen dem Volumen eines Einheitsgitters bzw. einer Einheitszelle, hergestellt für den Fall, dass k = (1 - x) ist und dem Volumen eines Einheitsgitters bzw. einer Einheitszelle, hergestellt für den Fall, dass k = (y - x) ist, worin k = 0 ist, wenn y - x < 0, wobei k den Lithiumgehalt in der allgemeinen Formel (1) darstellt.

**3.** Aktives Kathodenmaterial nach Anspruch 1, wobei

$$(a - 1)\, x + (m - 2)\, y - 2\, z \leq 0,$$

wobei a die Valenz von A der allgemeinen Formel (1) darstellt und m die Valenz von M der allgemeinen Formel (1) darstellt.

**4.** Aktives Kathodenmaterial nach irgendeinem der Ansprüche 1 bis 3, wobei $0,05 \leq z \leq 0,25$ ist.

**5.** Aktives Kathodenmaterial nach Anspruch 1, wobei M eine Valenz von +3 aufweist und x = y ist.

**6.** Kathode, umfassend:

ein aktives Kathodenmaterial nach irgendeinem der Ansprüche 1 bis 5;
ein elektrisch leitendes Material; und
ein Bindemittel.

**7.** Nichwässerige Sekundärbatterie, umfassend:

eine Kathode nach Anspruch 6;
eine Anode;
einen Elektrolyten; und

einen Separator.

**Revendications**

1.  Matériau actif de cathode représenté par la formule générale (1) suivante :

$$Li_{1-x}A_xFe_{1-y}M_yP_{1-z}Al_zO_4 \qquad (1)$$

dans laquelle A représente au moins un élément sélectionné parmi un élément de métal ou un élément de métal de transition présentant une valence de +1, de +2 ou de +3, sélectionné, de préférence, dans le groupe constitué des éléments Na, K, Mg, Ca, Zn, Al, Y ;
M représente au moins un élément sélectionné parmi un élément de métal ou un élément de métal de transition présentant une valence de +3, de +4 ou de +5, sélectionné, de préférence, dans le groupe constitué des éléments Al, Y, Ti, V, Cr, Mo, Nb, Zr, Hf, W, Sn, Sc, Zn, Cd, B, Ga, In, C et Si et avec $0 \leq x \leq 0,25$, $0 \leq y \leq 0,25$, $0 < z \leq 0,25$, et $x + y > 0$,
dans le cas où A présente une valence de +1, la relation suivante s'applique : $0 < x \leq y = z$.

2.  Matériau actif de cathode selon la revendication 1, dans lequel un taux de changement volumétrique est de 4 % ou moins entre un volume d'un réseau unitaire obtenu dans un cas où k = (1 - x) et un volume d'un réseau unitaire obtenu dans un cas où k = (y - x), où k = 0 si y - x < 0, k représentant la teneur en Li dans la formule générale (1).

3.  Matériau actif de cathode selon la revendication 1, répondant à la relation suivante :

$$(a - 1)\, x + (m - 2)\, y - 2z \leq 0$$

dans laquelle a est une valence de l'élément A issu de la formule générale (1) et m est une valence de l'élément M issu de la formule générale (1).

4.  Matériau actif de cathode selon l'une quelconque des revendications 1 à 3, répondant à la relation $0,05 \leq z \leq 0,25$.

5.  Matériau actif de cathode selon la revendication 1, dans lequel l'élément M a une valence de +3 et x = y.

6.  Cathode comprenant :

    un matériau actif de cathode selon l'une quelconque des revendications 1 à 5 ;
    un matériau électroconducteur ; et
    un liant.

7.  Pile secondaire non aqueuse comprenant :

    une cathode selon la revendication 6 ;
    une anode ;
    un électrolyte ; et
    un séparateur.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1246290 A
- US 20060014079 A1
- JP 2005522009 PCT
- JP 2008506243 PCT
- US 2006014079 A1